Europäisches Patentamt

(19) European Patent Office

Office européen des brevets

(11) Publication number: **0 058 455**
**A1**

(12) **EUROPEAN PATENT APPLICATION**

(21) Application number: **82200159.0**

(22) Date of filing: **10.02.82**

(51) Int. Cl.³: **B 23 Q 1/08**

(30) Priority: **12.02.81 NL 8100691**

(43) Date of publication of application:
**25.08.82 Bulletin 82/34**

(84) Designated Contracting States:
**BE DE FR GB IT NL SE**

(71) Applicant: **N.V. Gereedschapswerktuigenindustrie Hembrug**
**Hemkade 24a P.O.Box 412**
**NL-1500 EK Zaandam(NL)**

(72) Inventor: **Deaves, Donald Henry Thomas**
**No. 47, Pheasants Way**
**Rickmansworth Hertfordshire(GB)**

(74) Representative: **'t Jong, Bastiaan Jacobus et al,**
**OCTROOIBUREAU ARNOLD & SIEDSMA Sweelinckplein 1**
**NL-2517 GK 's-Gravenhage(NL)**

(54) **Machine tool.**

(57) A device for machining a work piece comprising a frame, a main spindle bearing connected with said frame and rotatably accommodating a main spindle, which carries at its work-piece end work-piece chucking means, the main spindle bearing comprising near the work-piece end of the main spindle, a plurality of first revolution body bearings each absorbing radial and axial forces and being groupwise mounted in direct contact with one another and near the other end of the main spindle, a second revolution body bearing having internally a conical face and being axially adjustable to a corresponding conical face of the main spindle and solely absorbing radial forces, preferably the first revolution body bearings are angular-contact ball bearings and the second revolution bearing is a cylinder bearing.

FIG. 4

EP 0 058 455 A1

MACHINE TOOL

The invention relates to a device for machining a work piece comprising a frame, a main spindle bearing connected with said frame and rotatably accommodating a main spindle, which carries at its work-piece end work-piece chucking means, the main spindle bearing comprising near the work-piece end of the main spindle, first revolution body bearings and near the other end of the main spindle, a second revolution body bearing having internally a conical face and being axially adjustable to a corresponding conical face of the main spindle and solely absorbinq radial forces.

The costs of manufacture of a work piece highly depend on the time required for carrying out the required machining operations. If it is desired to minimize the costs of a work piece manufactured by means of the device mentioned in the preamble, it is necessary to carry out the cutting operations at high speeds with large cuttings. Moreover, the final result has to be obtained in a minimum number of operations. This means that after-treatments have to be avoided as far as possible. In order to attain a high productivity in this manner it is necessary for the device set forth to have a particularly rigid construction, to remain free of play, even at high loads and to permit high

speeds.

A device with a main spindle construction of the kind seth forth above is known from the publication of Dr. F. Koenigsberger: "Berechnungen, Konstruktionsgrundlagen und Bauelemente, spanender Werkzeugmaschinen" and in particular from Figure 421 of that publication.

The invention has for its object to provide an improved device of the kind seth forth above in which a work piece held in the chucking means can be supported in a manner such that it can be accurately machined under heavy machining forces and at a high machining rate. According to the invention this is achieved in that the first revolution body bearings comprise a plurality of revolution body bearings each absorbing radial and axial forces and being groupwise mounted in direct contact with one another. In this way all axial forces and substantially all radial forces are transferred at a very short distance from the work piece by the first revolution body bearings to the frame, so that a very rigid construction is obtained. By mounting the bearings in direct contact with one another, the construction is also very compact, which is conducive to the rigidity of the assembly.

The first revolution body bearings are preferably angular contact bearings and the second revolution bearing is preferably a cylinder bearing. These bearings permit a high speed of rotation of the main spindle and hence an advantageously high machining rate of the work piece.

In a further advantageous embodiment of the invention the main spindle bearing is arranged in a gear box of a gear wheel transmission the latter comprising a gear wheel directly mounted on the main spindle on the side of the first revolution body bearings remote from the work piece end. The rotational driving force exerted through the gear wheel transmission to the main spindle only loads a short length of the main spindle, that is to say, the portion of the main spindle located between the gear wheel mounted on the main spindle and the work piece chucking means, exposing it to torsion. Owing to the small length of this main spindle portion exposed to torsion the elastic deformations are at a minimum. The second revolution body bearing can readily be axially adjusted by providing the device in accordance with the invention with a screw ring axially supporting the second revolution body bearing on the side of the smaller diameter of the conical face and engaging screwthread of the main spindle. When in addition a screw ring is provided on the other side of the second revolution bearing, the axial position of said bearing on the main spindle can be adjusted outside the gear box and be fixed in position by said second screw ring. In this way the main spindle can be mounted in the gear box in a simple manner.

Further features and advantages of the invention will become apparent from the following description of an embodiment of the invention with reference to the drawings.

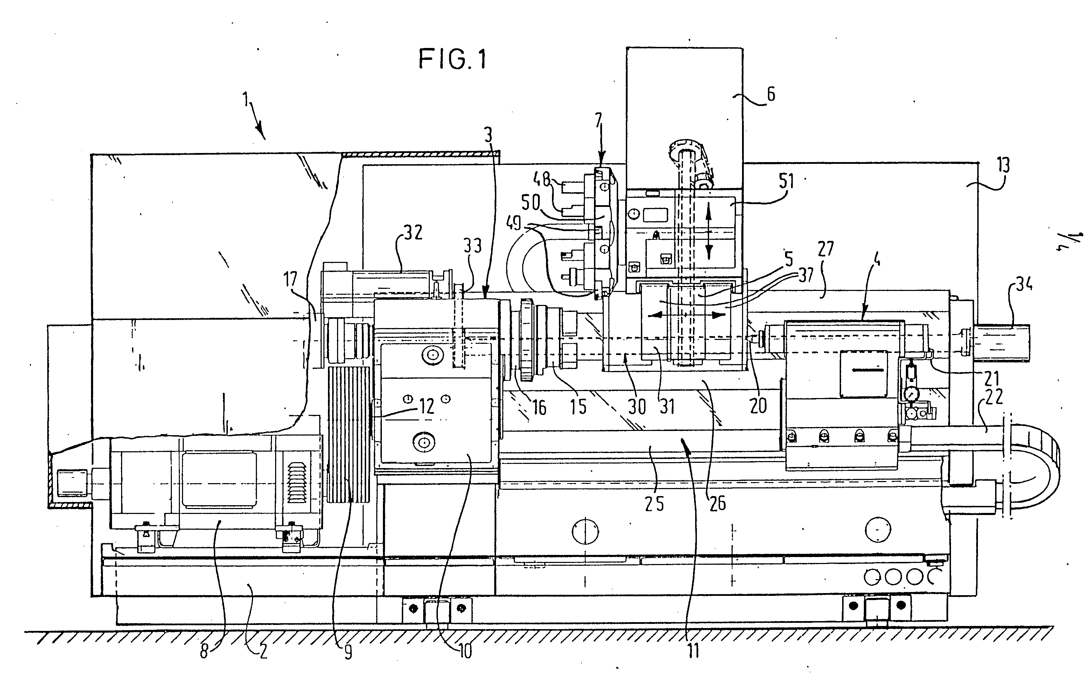

Fig. 1 is a front view of a device embodying the invention in the form of a lathe.

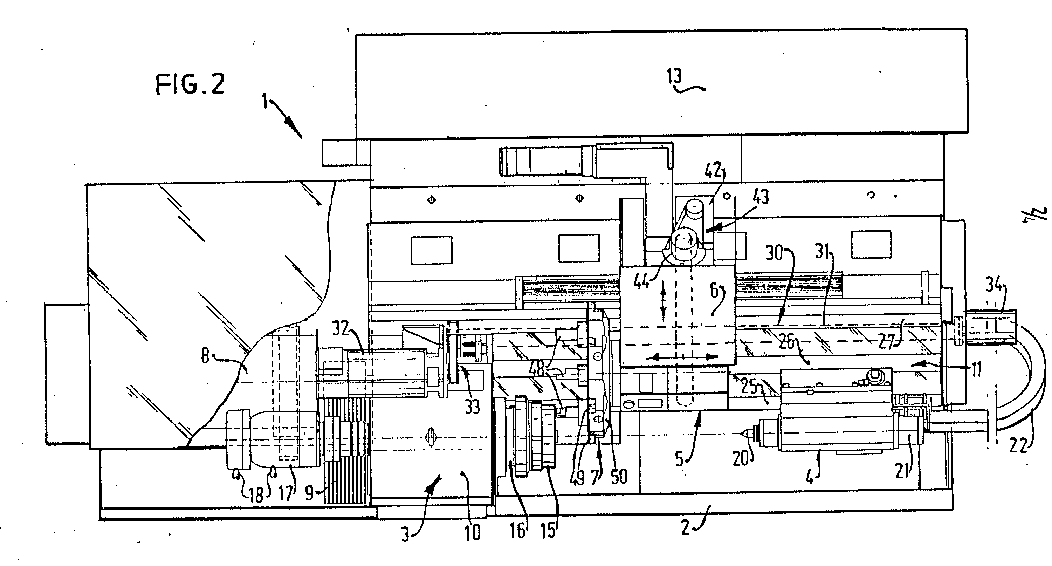

Fig. 2 is a plan view of the lathe shown in Fig. 1.

Fig 3 is a side elevation from the right-hand side of the lathe shown in Figs. 1 and 2.

Fig 4 is a sectional view of the gear box of the device of Fig. 1.

Fig. 5 shows on an enlarged scale part of the main spindle bearing shown in Fig. 4.

The frame 2 of the lathe 1 comprises a bed 11 arranged at an angle to the horizontal. With the frame is connected a head stock 3 and on the bed 11 a tail stock 4 is displaceable towards and away from the head stock 3 and fixable in position. On the bed 11 is also displaceable towards and away from the head stock 3 a support 5, which comprises a transverse slide 6 displaceable at right angles to the direction of displacement of the support. With the transverse slide 6 is connected a tool exchanger 7 carrying a plurality of turning tools 48, 49 to be set at will in a working position.

The head stock 3 comprises a main spindle 16 carrying work-piece chucking means formed by a chuck plate 15. The head spindle 16 is mounted in a gear box 10, which also accommodates a gear wheel transmission. The input shaft 12 of the gear box 10 is coupled through a belt transmission 9 with a driving motor 8. The driving motor 8 is a direct-current motor of controllable speed. The gear wheel transmission arranged in the gear box 10 includes a high and a low transmission rate actuated at will by means of magnetic cluthes. By means of these two transmission rates in conjuction with the controllable speed of the electric motor 8 the main spindle 16 can be rotated at any desired speed. The chuck plate 15 is actuated by a hydraulic control-device 17 of known type, which is actuated by means of a pedal (not shown). Through the hydraulic ducts 18 hydraulic fluid is fed to or conducted away from the control-device 17 under pressure so that a work piece can be clamped in or released from the chuck plate 15. By actuating the chuck plate 15 via a pedal a finished work piece can be very rapidly exchanged against a semi-product to be further machined. This fast exchangeability contributes to a high productivity.

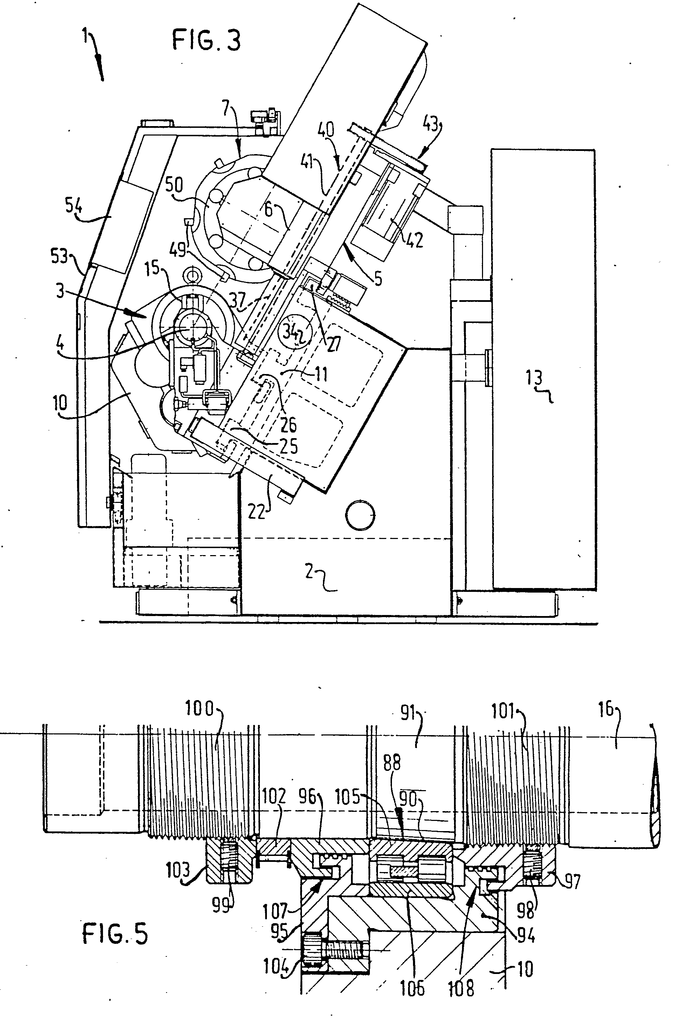

As is most clearly apparent from Fig. 3, the bed 11 comprises three planed guideways 25, 26, 27. The tail stock 4 is mounted on the lower way 25 and on the middle way 26. The support 5 is mounted on the middle way 26 and on the upper way 27. The tail stock 4 can be slided on the bed 11 towards and away from the chuck plate 15. The tail stock 4 carries a center 20 located on the centre line of the main spindle 16. The tail stock 4 also comprises hydraulic means 21 by which the center 20 can be loaded in the direction of the head spindle 16 for clamping a work piece with respect to the tail stock 4. The hydraulic means 21 are likewise actuated by means of a pedal (not shown) so that during operation a work piece can be rapidly clamped with the aid of the center 20 and be rapidly exchanged when finished against a semi-product to be further machined. The hydraulic input and output ducts for the hydraulic means 21 are arranged in a flexible conduit gutter 22.

The support 5 can be displaced in the direction of length of the bed 11 and hence parallel to the centre line of the head spindle 16 by means of a longitudinal gear 30. The longitudinal gear 30 comprises a screw spindle located below the level of the planed ways 25, 26, 27 and adapted to

be rotated by an electric motor 32 through a toothed belt transmission 33. At the underside of the support 5 is mounted in known manner a roving nut engaging the screw spindle so that during rotation of the screw spindle 31 the support 5 is displaced in the longitudinal direction.

The support 5 has two planed ways 37 extending at right angles to the ways of the bed 11. On these ways 37 the transverse slide 6 is slidably mounted. Like the support itself the transverse slide 6 is displaceable by means of a transverse gear 40. The transverse gear 40 comprises a screw spindle 41, which can be rotated by an electric motor 42 by means of a toothed belt transmission 43. The screw spindle 41 co-operates with a roving nut mounted at the underside of the transverse slide 6.

On the transverse slide 6 is mounted the tool exchanger 7 comprising a tool carrier 50 and a tool positioning device 51. Six external turning tools 49 can be arranged at the circumference of the tool carrier 50 and six internal turning tools 48 can be arranged at the front face of the tool carrier 50. The positioning device 51 comprises a motor which can rotate the tool carrier 50 into the desired position for moving the tool concerned 48, 49 into the operative position.

The lathe is controlled by means of a numberical control-device arranged in the casing 13. The casing 13 also contains the feed for the driving motor 8. The screw spindle 31 of the longitudinal gear 30 is coupled with an encoder 34 applying digital signals to the control-device for assessing the rotational position of the screw spindle. The control-device can assess by these signals the longitudinal position of the support 5 on the bed 11. In a similar manner the screw spindle 41 of the transverse gear 40 is coupled with an encoder 44 for assessing the transverse position of the tool exchanger 7 on the bed 11. The main spindle 16 is also coupled with an encoder (not shown) so that the rotational position of the main spindle can also be assessed by the control-device. The electric motors 32 and 42 of the longitudinal gear and the transverse gear respectively are governed by the control-device. Moreover, the driving motor 8 and the tool exchanger 7 are governed by said control-device. With the aid of a control-panel (not shown) a machining prgramme can be introduced into the memory of the control-device for manufacturing a desired work piece.

Fig. 3 shows that the lathe 1 is provided with a sliding door 53 having a window 54. The sliding door 53 is shut when a work piece is turned in order to retain scattering cooling fluid and chips.

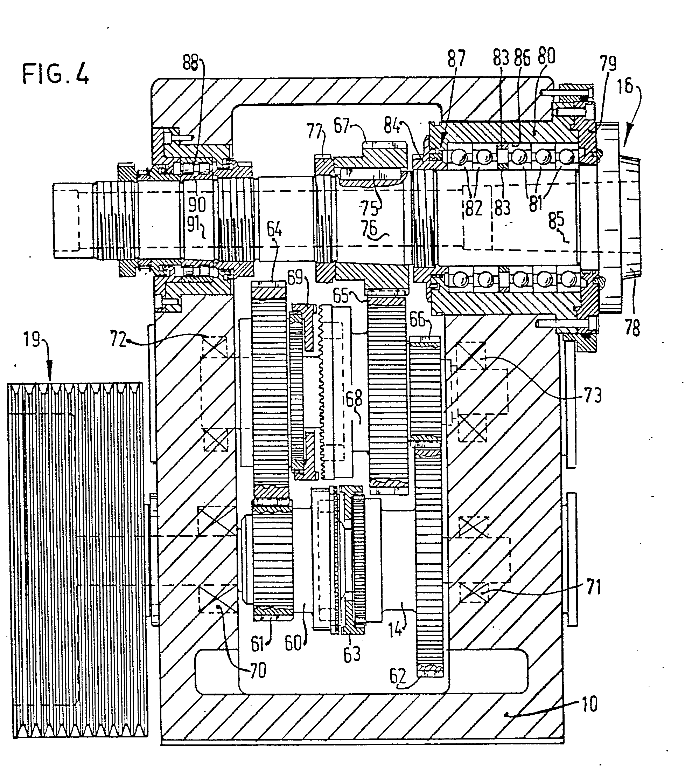

Fig. 4 shows that in accordance with the invention the main spindle 16 is journalled near its work-piece end 78 in a plurality of first revolution body bearings 81, 82 absorbing radial and axial forces and near the other end of the main spindle 16 in a second revolution body bearing 88, having internally a conical face 90 and being axially adjustable on a corresponding conical face 91 of the main spindle 16 and solely absorbing radial forces. The revolution body bearings 81, 82 are preferably angular-contact ball bearings allowing a high speed of rotation of the main spindle 16. The angular-contact ball bearings 81 are mounted, in accordance with the invention, in direct contact with one another and thus constitute a compact construction. The angular-contact all bearings 82 are also mounted in direct contact with one another. The angular-contact ball bearings 81 absorb axial forces substantially in left-hand direction as viewed in Fig. 4, whereas the angular-contact ball bearings 82 mainly absorb axial forces directed to the right in Fig. 4. The bearings 81, 82 are locked in the bearing bushing 80 at the front by means of a locking plate 79 pressing home the housing rings of the bearings 81, 82 in the bearing bushing 80. The shaft races of the bearings 81, 82 are urged against one another and against a shoulder 92 of the main spindle 16 by means of a screw ring 84 engaging the screw thread of the main spindle. As is shown, all angular-contact ball bearings 81, 82 are mounted on one and the same cylindrical part of the main spindle 16 and in one and the same cylindrical bore 86 of the bearing bushing 80. Since, moreover, the bearings 81, 82 are groupwise mounted in direct contact with one another, as stated above, a particularly rugged and rigid construction of the main apindle bearing is obtained. Together with the bearing bushing 80 the screw ring 84 constitues a labyrinth seal 87.

The construction of the second revolution body bearing 88 is shown on an enlarged scale in Fig. 5.

The second revolution body bearing 88, which as shown is preferably a two-row cylinder bearing, is mounted in the gear box 10 with the aid of a bearing bushing 94. The housing ring of the bearing 88 is locked in a bearing bushing 94 by means of a locking plate 95 mounted with the aid of bolts 104 on the bearing bushing 94. The shaft race 105 of the bearing 88 has an internal conical face 90 matching a conical face 91 of the main spindle 16. The shaft race 105 is fixed to the main spindle 16 by means of a foremost screw ring 97 and a hindmost screw ring 103. The foremost screw ring 97 is in contact with the shaft race 105 on the side therof having the larger diameter of the conical face and it engages a foremost screwthread portion 101 of the main spindle 16. The screw ring 97 is fixed on the main spindle 16 by means of a guard screw 98. On the side having the smaller diameter the shaft race 105 bears on a pressing ring 96, which bears on the screw ring 103 via a gear wheel 102. The gear wheel 102 forms part of a toothed belt transmission of the main spindle 16 on an encoder (not shown) coupled with the control-device for allowing the control-device to assess the rotational position and the rotational speed of the main spindle 16. The hindmost screw ring 103 is in engagement with a hindmost screwthread portion 100 of the main spindle 16 and is held there by means of a guard screw 99. When the bearing 88 is mounted, the shaft ring 105 is urged by means of the screw ring 103 onto the conical face 91 of the main spindle 16 to such an extent that owing to the radial expansion of the shaft ring 105 the radial play of the bearing 88 is fully eliminated. Subsequently the shaft ring 105 can be fixed in place by means of the screw ring 97. If replacement of the bearing 88 is required, it can be removed from the main spindle 16 with the aid of the screw ring 97. Together with the locking plate 95 the pressing ring 96 constitutes a labyrinth seal 107 and together with the bearing bushing 94 the foremost screw ring 97 also constitutes a labyrinth seal 108.

According to the invention the main spindle bearing is arranged in the gear box of a gear wheel transmission, which comprises a gear wheel 67, directly mounted on the main spindle 16 at the side of the first reversing bearings 81, 82 remote from the work-piece end 78. Thus a very short force transmitting path for the rotational drive is formed from the main spindle 16 to the point where the cutting operation is carried out. Owing to this short path of force transmission great accuracy is ensured.

As is shown in Fig. 4, the bearing 67 is mounted by means of a screw ring 77 on a conical face 76 of the main spindle 16. The gear wheel 67 is non-rotatably connected with the main spindle 16 by means of a key 75. The gear wheel transmission 14 comprises furthermore a primary shaft 60 carrying the belt disc 19 of the belt transmission to the driving motor and being journalled in the gear box 10 by means of bearings 70, 71. A small gear wheel 61 is rigidly connected with the primary shaft 60. The primary shaft 60 is furthermore provided with a large gear wheel 62, which can be coupled with the primary shaft 60 by means of an electro-magnetic cluth 63. The gear wheel 62 of the primary shaft 60 is continuously in engagement with a gear wheel 66 of a secondary shaft 68, which is also journalled in the gear box 10 by means of bearings 72, 73. The gear wheel 66 is rigidly coupled with the secondary shaft 68. With the secondary shaft 68 is also rigidly coupled a gear wheel 65, which is continuously in engagement with the gear wheel 67 on the main spindle 16. A gear wheel 64, which is constantly in mesh with the small gear wheel 61 on the primary shaft 60, is journalled on the secondary shaft 68 and it can be coupled with said secondary shaft 68 by means of the electro-magnetic clutch 69. The electro-magnetic clutches 63 and 69 are controlled by the control-device of the lathe 1 and can only be switched on separately. When the clutch 63 is switched on and hence the gear wheel 62 is coupled with the primary shaft 60, the power in the gear wheel transmission 14 runs from the pulley 19 to the main spindle 16 via the primary shaft 60, the gear wheel 62, the gear wheel 66, the secondary shaft 68 and the gear wheel 65 and 67 to the main spindle 16. When this power drive train is switched on, the main spindle 16 is driven with a relatively high speed as compared with the input speed of the pulley 19. However, when the clutch 69 is switched on and the clutch 63 is switched off, the power runs from the pulley 19 via th primary shaft 60, the gear wheels 61, 64, 65 and 67 to the main spindle 16. In this case the main spindle 16 rotates with a low speed as compared with the speed of rotation of the pulley 19.

CLAIMS

1. A device for machining a work piece comprising a frame, a main spindle bearing connected with said frame and rotatably accommodating a main spindle, which carries at its work-piece end work-piece chucking means, the main spindle bearing comprising near the work-piece end of the main spindle, first revolution body bearings and near the other end of the main spindle, a second revolution body bearing having internally a conical face and being axially adjustable to a corresponding conical face of the main spindle and solely absorbing radial forces characterized in that the first revolution body bearings comprise a plurality of revolution body bearings each absorbing radial and axial forces and being groupwise mounted in direct contact with one another.

2. A device as claimed in Claim 1, characterized in that the first revolution body bearings are angular-contact ball bearings and the second revolution bearing is a cylinder bearing.

3. A device as claimed in either of the preceding Claims characterized in that the main spindle bearing is arranged in a gear box of a gear wheel transmission and in that the gear wheel transmission comprises a gear wheel directly mounted on the main spindle on the side of the first revolution body bearings remote from the work-piece end.

FIG.1

0058455

FIG.2

0058455

0058455

FIG.3

FIG.5

FIG.4

0058455

4/4

0058455

**European Patent Office**

**EUROPEAN SEARCH REPORT**

Application number

EP 82 20 0159

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 168 040 (SKF) *Page 2, lines 15-20* | 1-3 | B 23 Q 1/08 |
| X | CH-A- 258 910 (SCHAUBLIN) *Page 1, lines 40-50; figure 2* | 1,3 | |

TECHNICAL FIELDS
SEARCHED (Int. Cl. ³)

B 23 Q 1/00

The present search report has been drawn up for all claims

| Place of search | Date of completion of the search | Examiner |
|---|---|---|
| THE HAGUE | 03-06-1982 | DE GUSSEM J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82